Europäisches Patentamt

European Patent Office

Office européen des brevets

(19)

(11) Veröffentlichungsnummer: **0 224 733**
**B1**

(12) **EUROPÄISCHE PATENTSCHRIFT**

(45) Veröffentlichungstag der Patentschrift:
21.03.90

(21) Anmeldenummer: 86115224.7

(22) Anmeldetag: 03.11.86

(51) Int. Cl.⁴: **H01G 1/14**

(54) **Elektrischer Kondensator aus einem Stapel aus Kunststofflagen mit stirnseitig befestigten Anschlussdrähten.**

(30) Priorität: 21.11.85 DE 3541237

(43) Veröffentlichungstag der Anmeldung:
10.06.87 Patentblatt 87/24

(45) Bekanntmachung des Hinweises auf die Patenterteilung:
21.03.90 Patentblatt 90/12

(84) Benannte Vertragsstaaten:
DE ES FR GB IT

(56) Entgegenhaltungen:
US-A- 3 222 450
US-A- 3 411 193
US-A- 3 693 244

(73) Patentinhaber: Siemens Aktiengesellschaft,
Wittelsbacherplatz 2, D-8000 München 2(DE)

(72) Erfinder: Meyer, Norbert, Dipl.-Ing. (FH),
Gartenstrasse 7b, D-8411 Neudorf(DE)

## Beschreibung

Die Erfindung betrifft einen elektrischen Kondensator, der aus einem Stapel aus übereinander geschichteten, mit regenerierfähig dünnen Belegungen versehenen Kunststofflagen besteht und der aus einem auf eine Trommel gewickelten Mutterkondensator durch Aufteilen in radialer Richtung und in Umfangsrichtung hergestellt und auf beiden gegenüberliegenden Stirnseiten mittels je zweier übereinander angeordneter Kontaktschichten mit äußeren Anschlußdrähten versehen ist und bei dem zur Festlegung des Abstandes der äußeren Anschlußdrähte auf ein bestimmtes Rastermaß der Anschlußöffnungen der Platte einer gedruckten Schaltung die erste Kontaktschicht aus einem höherschmelzenden Metall besteht als die zweite, lötbare Kontaktschicht und die Anschlußdrähte beim Löt- bzw. Schweißvorgang in das Metall der zweiten Kontaktschicht eingedrückt sind und an der ersten Kontaktschicht anliegen.

Ein Kondensator mit diesen Merkmalen ist in der deutschen Gebrauchsmusterschrift Nr. 6 610 477 beschrieben. Diese Gebrauchsmusterschrift entspricht den beiden US-PSen 3 693 244 (mit Verfahrensansprüchen) und 3 710 211 ( mit Gegenstandsansprüchen).

Derartige Kondensatoren sind in aller Regel in einem Becher aus Isolierstoff eingebaut und mit isolierendem Kunststoff vergossen, wobei die Anschlußdrähte radial aus der Öffnung des Bechers herausragen, wie dies in der DE-OS 3 112 906 (entsprechend US-PS 4 443 656) oder in der DE-OS 3 132 243 (entsprechend US-PS 4 448 265) bzw. in der beiden Veröffentlichungen entsprechenden EP-A 20 062 167 beispielsweise beschrieben ist.

Zum Befestigen der Anschlußdrähte an den ersten Kontaktschichten des Stapels wird ein kombiniertes Löt- und Schweißverfahren verwendet, bei dem an jeden Anschlußdraht je zwei Schweißelektroden angelegt werden, die die Anschlußdrähte, die selbstverständlich selbst lötfähig sind oder einen lötfähigen Überzug enthalten, erwärmen und in die zweiten Kontaktschichten soweit eindrücken, bis die Anschlußdrähte an den ersten Kontaktschichten anliegen. Da der Abstand der Oberflächen der ersten Kontaktschichten voneinander auf das Rastermaß der Öffnungen der Platine der gedruckten Schaltungen abgestimmt ist, sind auch die Anschlußdrähte selbst unter Berücksichtigung ihrer Durchmesser voneinander in dem gewünschten Rastermaß entfernt, jeweils gerechnet von Achse zu Achse des Anschlußdrahtes, entsprechend dem Mittelpunktabstand der Öffnungen in der gedruckten Schaltung.

Bei diesem Befestigungsvorgang der Anschlußdrähte entstehen im Bereich der Stirnflächen Verbreiterungen der Anschlußdrähte, die auf eine Verformung durch die Erwärmung und den Druck der Schweißelektroden während des Befestigens zurückzuführen sind. Das Aussehen derartig befestigter Stromzuführungsdrähte ist in dem SIEMENS-Prospekt "Ideal für Leiterplatten: MK-

Schichtkondensatoren", Nr. B 21/1210, WS 107520 aus dem Jahre 1975, gezeigt. Die englischsprachige Ausgabe dieses Prospektes trägt den Titel "Ideally suitable PC board mounting: metallized plastic layer capacitors", No. B 21/2110. 101 WS 2766 aus dem Jahre 1976.

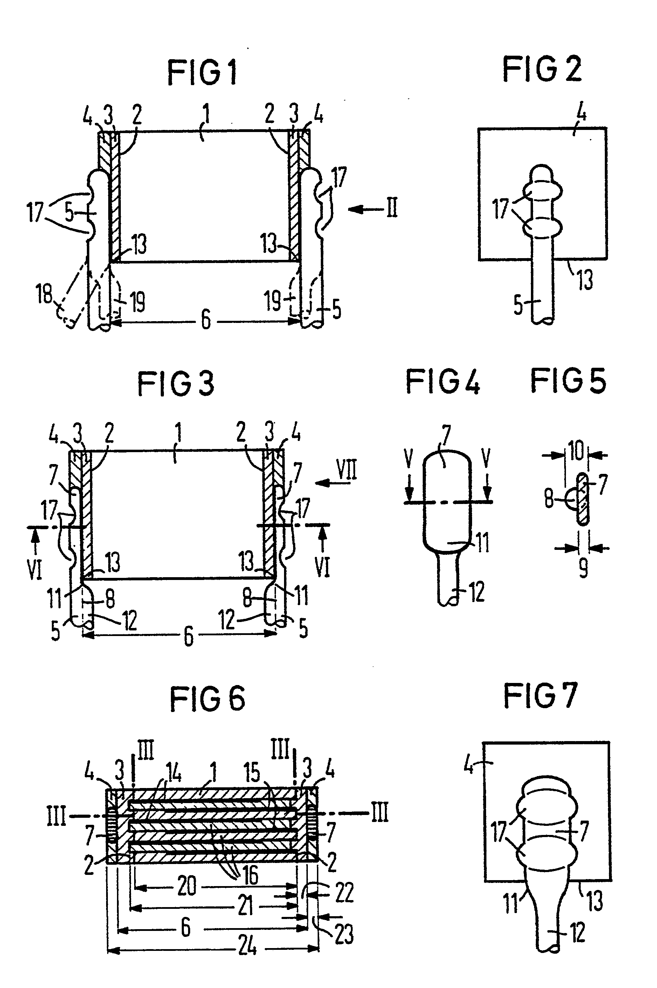

Ein derartiger, zum Stand der Technik gehörender elektrischer Kondensator ist in den Figuren 1 und 2 gezeigt und wird bei der Figurenbeschreibung näher erläutert.

Diese bekannten Stapel- bzw. Schichtkondensatoren haben sich in der Praxis bewährt und sind bereits in Stückzahlen von mehreren hundert Millionen auf den Markt gebracht worden. Dennoch sind bei diesem Massenartikel weitere Verbesserungen möglich und teilweise sogar notwendig.

So können einerseits beim Befestigen der Anschlußdrähte dieselben durch den relativ hohen Druck verbogen werden, so daß sie durch einen erneuten Arbeitsgang wieder in die für das Rastermaß erforderliche Richtung gebogen werden müssen. Andererseits soll bei der Herstellung von Kondensatoren, die - wie oben erläutert - in einem Becher untergebracht sind, der vorhandene Raum im Becher möglichst gut ausgenutzt werden. Aus diesem Grund wird angestrebt für die Herstellung eines Kondensators mit einem Rastermaß von 5 mm anstelle einer sonst üblichen 4 mm breiten Folie eine solche mit einer Breite von 4,5 mm zu verwenden, wodurch eine um 10% höhere Kapazität erreicht werden könnte. Das Problem, das dabei auftritt, besteht darin, daß die stirnseitig auf die ersten Kontaktschichten angeschweißten Anschlußdrähte das zulässige Rastermaß überschreiten, wodurch die Entfernung der beiden Anschlußdrähte zueinander zu groß wird. Man hat sich bisher dadurch geholfen, daß die im Querschnitt runden Anschlußdrähte nach dem Bedrahten auf das Rastermaß zurückgebogen wurden, wie dies in Fig. 1 durch die gestrichelt dargestellten Anschlußdrähte 19 gezeigt ist. Bei dieser Lösung tritt der Nachteil auf, daß die Verbindungsstelle zwischen erster Kontaktschicht und Anschlußdraht mechanisch erheblich belastet wird, so daß es zu Kontaktfehlern kommen kann.

In der US-PS 3 222 450 ist insbesondere ein elektrischer Kondensator als elektrisches Bauelement beschrieben, das in einem Becher untergebracht ist und dessen angelötete Stromzuführungselemente durch Öffnungen im Boden oder in der Kante zwischen Boden und Seitenwand des Bechers geführt sind. Hierfür sind die Stromzuführungselemente jeweils zwei Mal abgebogen, und zwar rechtwinkelig, wenn die Öffnungen im Boden des Bechers vorhanden sind, und stumpfwinkelig, wenn die Öffnungen sich in den Kanten befinden. Die Stromzuführungselemente bestehen entweder aus Draht oder aus einem Rohrteil allein oder kombiniert aus einem Rohrteil und einem Drahtteil, der dann in den Rohrteil eingeschoben ist. Drahtförmige Stromzuführungselemente sind im Querschnitt nicht verändert, während rohrförmige Stromzuführungselemente im Bereich der Lötstelle an der Kondensatorstirnseite und bis über die erste Abbiegung flach gequetscht sind. Abgesehen davon, daß die bekannten Stromzuführungselemente durch das zweimalige Abbiegen keine verbesserte Raumausnutzung des Bechers bewirken, ist es zwingend, daß die Stromzuführungsdrähte zuerst in den Becher eingesetzt werden, wonach dann erst das Bauelement eingeführt wird und dann die Verlötung erfolgt. Bei zwei Kontaktschichten an jeder Stirnseite zum Zwecke der Festlegung des Rastermaßabstandes durch die ersten Kontaktschichten sind die bekannten rohrförmigen Stromzuführungselemente somit nicht einsetzbar. Bei abgebogenen drahtförmigen Stromzuführungselementen treten außerdem die oben bereits geschilderten Probleme auf.

Der Erfindung liegt die Aufgabe zugrunde, einen elektrischen Kondensator anzugeben, bei dem die erläuterten Unzulänglichkeiten, nämlich Verbiegen der Anschlußdrähte beim Bedrahten und/oder Erfordernis des Ausrichtens der Anschlußdrähte auf ein Rastermaß entsprechend dem Abstand der Oberflächen der ersten Kontaktschichten zueinander, nicht auftreten und eine verbesserte Raumausnutzung bei im Becher eingesetzten Kondensatoren erreicht wird.

Zur Lösung dieser Aufgabe ist der elektrische Kondensator der eingangs angegebenen Art erfindungsgemäß dadurch gekennzeichnet, daß die Anschlußdrähte je einen an den ersten Kontaktschichten anliegenden und in die zweiten Kontaktschichten eingedrückten Flachteil aufweisen, der gegenüber der Achse der Anschlußdrähte seitlich versetzt ist, dessen Dicke etwa ein Drittel bis zwei Drittel des Durchmessers der Anschlußdrähte beträgt und dessen Übergang in den Rundteil je die Kanten der ersten Kontaktschichten überragt, und daß die Achsen der Anschlußdrähte praktisch in der Ebene der ersten Kontaktschichten liegen.

Durch die Erfindung werden folgende Vorteile erzielt.

Die Gesamtbreite des Kondensators wird an jeder Stirnseite je um die Hälfte des Drahtdurchmesser verringert. Eine mechanische Beanspruchung der Kontaktflächen nach dem Befestigen der Anschlußdrähte tritt nicht auf. Durch die größere Kontaktfläche wird der Kondensator beim Befestigen der Anschlußdrähte mit weniger Druck beansprucht. Die größere Kontaktfläche erhöht ferner die Abzugsfestigkeit der Anschlußdrähte. Es tritt eine Einsparung an Metall der zweiten, lötfähigen Kontaktschicht ein. Der elektrische Kondensator wird beim Befestigen der Anschlußdrähte einer geringeren Temperaturbelastung ausgesetzt. Nicht zuletzt treten beim Befestigen der Anschlußdrähte weniger Lichtbögen auf, die zum Verspritzen von Lot, d.h. zu sogenannten Spratzern, führen, wobei die Anschlußdrähte im Bereich der Spratzer versproden und dadurch abfallen können.

Die Erfindung wird nachfolgend anhand der beigefügten Figuren erläutert.

Es zeigen:

Fig. 1 einen zum Stand der Technik gehörenden elektrischen Kondensator in Seitenansicht und teilweisem Schnitt;

Fig. 2 den Kondensator nach Fig. 1 in Seitenansicht entsprechend dem Pfeil II in Fig. 1;

Fig. 3 einen Kondensator nach der Erfindung in Seitenansicht und teilweisem Schnitt längs den Linien III-III, in Fig. 6;

Fig. 4 einen Anschlußdraht in Seitenansicht;

Fig. 5 den Anschlußdraht im Schnitt längs der Linie V-V in Fig. 4;

Fig. 6 den Kondensator nach Fig. 3 im Schnitt längs der Linie VI-VI in Fig. 3;

Fig. 7 den Kondensator gemäß Fig. 3 in Seitenansicht entsprechend dem Pfeil VII in Fig. 3.

Soweit in den Figuren einander entsprechende Teile vorhanden sind, sind diese auch mit gleichen Bezugszeichen versehen.

Die Fig. 1 und 2 zeigen einen zum Stand der Technik gehörenden Kondensator, wobei die Seitenteile im Schnitt dargestellt sind, etwa längs den Linien III-III in Fig. 6. Der elektrische Kondensator besteht aus einem Stapel 1 aus übereinander geschichteten (vgl. Fig.6), mit regenerierfähig dünnen Belegungen 14, 15 versehenen Kunststofflagen 16 und ist aus einem auf eine Trommel gewickelten Mutterkondensator durch Aufteilen in radialer Richtung und in Umfangsrichtung hergestellt. Dieses Verfahren ist in dem eingangs angegebenen SIEMENS-Prospekt anschaulich erläutert und beispielsweise in der DE-PS 1 764 541 (entsprechend den US-PSen 3 670 378 und 3 728 765) und z.B. auch in der der DE-PS 1 764 548 (entsprechend der US-PS 3 614 561) beschrieben. Die Kunststofflagen 16 bestehen z.B. aus wenige μm dicken Folien aus Polycarbonat, Polyäthylenterephthalat oder Polypropylen.

Die Belegungen 14 sind in Fig. 6 an der linken Stirnseite 2 und die Belegungen 15 an der gegenüberliegenden rechten Stirnseite 2 elektrisch miteinander durch je eine erste Metallschicht 3 verbunden. Diese erste Metallschicht 3 wird vorzugsweise nach dem für diese Zwecke weithin bekannten Schoopverfahren (Metallspritzverfahren) hergestellt, wobei es möglich ist, daß der Abstand zwischen den beiden Oberflächen der jeweils ersten Metallschichten 3 voneinander auf einem bestimmten und gewünschten Maß gehalten werden kann. Die ersten Metallschichten 3 bestehen aus höherschmelzenden Metall, nämlich vorzugsweise Aluminium, einem Ventilmetall, wenn auch die Belegungen 14 und 15 aus Aluminium oder einen hohen Anteil Aluminium enthaltenden Legierungen bestehen. Der Übergangswiderstand zwischen den Belegungen 14 bzw. 15 und den ersten Metallschichten 3 ist auf diese Weise Null oder vernachlässigbar klein.

Auf die ersten Kontaktschichten 3 sind jeweils Kontaktschichten 4 aufgetragen, die aus einem niedrigerschmelzenden Metall bestehen, insbesondere aus sogenanntem Weißmetall (einer Zinn-Blei-Legierung mit einem Schmelzpunkt von etwa 300°C).

In die Kontaktschichten 4 sind die Anschlußdrähte 5 eingedrückt. Diese Anschlußdrähte bestehen aus einem lötfähigen Metall oder sind mit einem lötfähigen Metallüberzug versehen. Durch gleichzeitiges Anlegen von je zwei Schweißelektroden an die Anschlußdrähte 5 werden diese erwärmt, wodurch die Kontaktschichten 4 an diesen Stellen schmelzen und die Anschlußdrähte 5 eingedrückt werden können, bis sie an den bei diesen Temperaturen nicht schmelzenden Kontaktschichten 3 anliegen.

Durch diese jeweils beiden Schweißelektroden entstehen an den Anschlußdrähten 5 in den Fig. 2 und 7 übertrieben gezeigten Verbreiterungen 17. Die Schweißelektroden müssen um einen gewissen Betrag von den Kanten 13 der ersten Kontaktschichten 3 zur Mitte der Stirnseiten 2 versetzt angesetzt werden, damit der Stapel nicht zerstört wird, die Anschlußdrähte nicht verbogen werden bzw. nicht in diesem Bereich nahe der Kante verspröden. Dadurch wird im Bereich der Kanten 13 die Kontaktschicht 4 zunächst nicht geschmolzen, wodurch die Gefahr besteht, daß die Anschlußdrähte 5 nach außen abgebogen werden, wie es in Fig. 1 durch den gestrichelt angedeuteten Teil 18 des Anschlußdrahtes 5 in etwas übertriebener Form angedeutet ist. Die Anschlußdrähte 5 müssen in diesem Fall wieder in die gewünschte Richtung zurückgebogen werden.

Man erkennt aus Fig. 1 deutlich, daß die Anschlußdrähte 5 in gerader Ausrichtung und mit ihrer Achse parallel zu den Oberflächen der ersten Kontaktschicht 3 die Abmessungen des Kondensators zwei Mal je um die Hälfte Drahtdurchmessers vergrößern. Der Innenraum des Bechers, in den der Kondensator eingesetzt werden soll, ist um diesen Betrag länger und sein Volumen wird nicht voll ausgenutzt. Daran ändert sich auch nichts, wenn man die Anschlußdrähte 5 zunächst um die Kanten 13 der ersten Kontaktschichten 3 etwas herumbiegt und dann wieder in die radiale Richtung zurückbiegt, wie dies durch die gestrichelten Teile 19 Anschlußdrähte 5 dargestellt ist.

Man erreicht zwar auf diese Weise, daß bei Kondensatoren mit einem Rastermaß (Mittelpunktabstand der Öffnungen in der Platine der gedruckten Schaltung) von 5 mm statt bisher 4,0 mm breiten Kunststoffolien nun 4,5mm breite Kunststoffolien für die Herstellung eingesetzt werden können, jedoch wird nach wie vor ein hinsichtlich seiner Länge etwas größerer Becher erforderlich. Außerdem stellt das zweimalige Abbiegen der Anschlußdrähte zur Bildung der Teile 19 zusätzliche Arbeitsgänge dar, die in die automatische Fertigung eingebaut werden müssen und wegen ihres Aufwandes die Taktzeiten des Automaten verlängern.

Die Erfindung schafft hier nun Abhilfe, die bei dem als Massenprodukt anzusehenden Kondensatoren zu in ihrer Summe beträchtlichen Vorteilen führt, obwohl es sich um eine einfache Maßnahme handelt, die aber durch den bisher bekannten Stand der Technik und auch die bisher bekannten Fertigungsverfahren nicht nahegelegt wird.

Die Fig. 3 bis 7, in denen gleiche Teile wie in Fig. 1 mit gleichen Bezugszeichen versehen sind, zeigen dies sehr deutlich.

Die Anschlußdrähte 5 weisen je einen an den ersten Kontaktschichten 3 anliegenden und in die zweiten Kontaktschichten 4 eingedrückten Flachteil 7 auf, der gegenüber der Achse 8 der Anschlußdrähte 5 seitlich versetzt ist, dessen Dicke 9 (vgl. Fig. 5) etwa dem halben Durchmesser 10 der Anschlußdrähte 5 entspricht. Der Übergang 11 vom Flachteil 7 in den Rundteil 12 überragt jede Kanten 13 der ersten Kontaktschichten 3, und die Achsen 8 der Anschlußdrähte 5 liegen praktisch in der Ebene der ersten Kontaktschichten 3.

Die Fig. 4 und 5 zeigen einen solchen Anschlußdraht vor seinem Anbringen an den Kondensator. Der Flachteil 7 wird durch ein entsprechendes Preßwerkzeug in der gewünschten Weise erzeugt, so daß ein Übergang 11 vom Flachteil 7 in den Rundteil 12 entsteht.

Auch hier entstehen während des Befestigens an den Kontaktschichten 3 und 4 im Flachteil 7 durch den Druck der Schweißelektroden und die erzeugte Wärme Verbreiterungen 17, die in Fig. 7 dargestellt und in Fig. 3 als Vertiefungen gezeigt sind.

Da die Wärme in dem gegenüber dem Rundteil 12 des Anschlußdrahtes 5 nur halb so dünnen Flachteil 7 sich wesentlich besser ausbreiten kann, ist - wie Versuche gezeigt haben - die Gefahr des Verbiegens der Anschlußdrähte überraschenderweise nicht gegeben. Der Arbeitsgang des Flachpressens der Anschlußdrähte 5 zur Erzeugung des Flachteiles 7 läßt sich ohne Schwierigkeiten in den automatischen Herstellungsprozeß einbauen, weil dies gleichzeitig mit dem ohnehin erforderlichen Abschneiden der von einer Voratsrolle kommenden Anschlußdrähte durchgeführt werden kann.

Fig. 6 ist hinsichtlich des Aufbaus des Stapels 1 bereits zusammen mit Fig. 1 erläutert. An dieser Stelle sollen daher im Zusammenhang mit Fig. 6 nur noch die Vorteile der Erfindung erläutert werden. Mit 20 ist die Breite der Folien bezeichnet, die zur Herstellung des Kondensators auf die Trommel gewickelt werden. Man erkennt, daß — wie bekannt — die Kunststofflagen 16 alternierend um einen gewissen Betrag gegeneinander versetzt sind, so daß ein Stapel 1 entsteht, dessen Abstand zwischen den gegenüberliegenden Stirnseiten 2 mit 21 bezeichnet ist. Durch die Dicke 22 der ersten Kontaktschichten 3 kann der gewünschte Rastermaßabstand erzielt werden, der in Fig. 6 mit 6 eingezeichnet ist, weil er praktisch auch dem Abstand der Anschlußdrähte, gemessen von Drahtachse zu Drahtachse (vgl. Fig. 3), entspricht.

Die Verhältnisse sind in Fig. 6 zur Verdeutlichung erheblich übertrieben dargestellt. In der Praxis betragen die Dicken 22 der ersten Kontaktschichten 3 etwa 0,1 bis 0,5 mm und die Dicken 23 der zweiten Kontaktschichten etwa 0,2 bis 0,3 mm, wenn Anschlußdrähte mit einem Durchmesser von etwa 0,5 mm verwendet werden.

Die Flachteile 7 der Anschlußdrähte ragen nicht mehr über die Oberfläche der zweiten Kontaktschichten 4 hinaus, so daß der Innenraum des Bechers voll ausgenutzt werden kann, denn der Abstand 24 zwischen Oberflächen der zweiten Kontaktschichten 4 wird vollständig ausgenutzt.

Für einen elektrischen Kondensator mit einem Rastermaß von 5 mm können anstelle der bisher eingesetzten, 4 mm breiten Folien nunmehr Folien einer Breite 20 von 4,5 mm eingesetzt werden. Dementsprechend ist auch der Kapazitätsgewinn etwa um 10% höher. Der Abstand 6 zwischen den Oberflächen der ersten Kontaktschichten 3 beträgt dann nämlich die gewünschten 5 mm, wobei die Differenz zwischen der Folienbreite von 4,5 mm und dem Rastermaß entsprechend dem Abstand 6 von 5 mm im

wesentlichen auf die seitliche Versetzung der alternierend angeordneten Kunststofflagen 16, sowie auf die Dicke der ersten Kontaktschichten 3 zurückzuführen ist.

Bezugszeichenliste

1 Stapel aus Kunststofflagen
2 Stirnseiten des Stapels 1
3 erste Kontaktschichten
4 zweite Kontaktschichten
5 äußere Anschlußdrähte
6 Abstand der Anschlußdrähte 5 voneinander
7 Flachteil der Anschlußdrähte 5
8 Achse der Anschlußdrähte 5
9 Dicke des Flachteiles 7
10 Durchmesser des Anschlußdrahtes 5
11 Übergang vom Flachteil 7 in den Rundteil 12
12 Rundteil der Anschlußdrähte 5
13 Kanten der ersten Kontaktschichten 3
14 regenerierfähig dünne Belegungen
15 regenerierfähig dünne Belegungen
16 Kunststofflagen
17 Verbreiterungen der Anschlußdrähte 5
18 Teil des Anschlußdrahtes 5
19 Teile der Anschlußdrähte 5
20 Folienbreite
21 Abstand der Stirnseiten 2
22 Dicke der ersten Kontaktschichten 3
23 Dicke der zweiten Kontaktschichten 4
24 Abstand zwischen den Oberflächen der zweiten Kontaktschichten 4

Patentanspruch

1. Elektrischer Kondensator, der aus einem Stapel (1) aus übereinander geschichteten, mit regenerierfähig dünnen Belegungen versehenen Kunststofflagen besteht und der aus einem auf eine Trommel gewickelten Mutterkondensator durch Aufteilen in radialer Richtung und in Umfangsrichtung hergestellt und auf beiden gegenüberliegenden Stirnseiten (2) mittels je zweier übereinander angeordneter Kontaktschichten (3, 4) mit äußeren Anschlußdrähten (5) versehen ist und bei dem zur Festlegung des Abstandes (6) der äußeren Anschlußdrähte (5) auf ein bestimmtes Rastermaß der Anschlußöffnungen der Platte einer gedruckten Schaltung die erste Kontaktschicht (3) aus einem höherschmelzenden Metall besteht als die zweite, lötbare Kontaktschicht (4) und die Anschlußdrähte (5) beim Löt- bzw. Schweißvorgang in das Metall der zweiten Kontaktschicht (4) eingedrückt sind und an der ersten Kontaktschicht (3) anliegen, dadurch gekennzeichnet, daß die Anschlußdrähte (5) je einen an den ersten Kontaktschichten (3) anliegenden und in die zweiten Kontaktschichten (4) eingedrückten Flachteil (7) aufweisen, der gegenüber der Achse (8) der Anschlußdrähte (5) seitlich versetzt ist, dessen Dicke (9) etwa ein Drittel bis zwei Drittel des Durchmessers (10) der Anschlußdrähte (5) beträgt und dessen Übergang (11) in den Rundteil (12) je die Kanten (13) der ersten Kontaktschichten (3) überragt, und daß die Achsen (8) der Anschlußdrähte (5) praktisch in der Ebene der ersten Kontaktschichten (3) liegen.

Claim

1. Electrical capacitor which consists of a stack (1) of superposed plastic layers provided with regeneratable thin coatings and which is manufactured from a mother capacitor wound on a drum by dividing up in the radial direction and in the direction of the circumference, and is provided with external connecting wires (5) on both mutually confronting end faces (2) by means of in each case two contact layers (3, 4) arranged on top of each other and in which, in order to determine the distance (6), to a particular modular dimension, between the outer connecting wires (5) and the connection ports on the board of a printed circuit, the first contact layer (3) consists of a metal with a higher melting temperature than the second solderable contact layer (4) and the connecting wires (5) during the soldering or welding process are pressed into the metal of the second contact layer (4) and rest against the first contact layer (3), characterized that the connecting wires (5) each have a flat part (7) resting against the first contact layers (3) and pressed into the second contact layers (4), which flat part is laterally displaced in relation to the axis (8) of the connecting wires (5) and the thickness (9) of which is approximately one third to two thirds of the diameter (10) of the connecting wires (5) and the transition (11) of which into the round part (12) projects over each of the edges (13) of the first contact layers (3), and in that the axes (8) of the connecting wires (5) lie practically on the level of the first contact layers (3).

Revendication

1. Condensateur électrique constitué par un empilage (1) de couches de matière plastique superposées, comportant des armatures minces régénérables, qui a été fabriqué à partir d'un condensateur mère enroulé sur un tambour, par subdivision dans une direction radiale et dans une direction circonférentielle, et pourvu, sur deux faces frontales opposées (2), de deux couches respectives de contact superposées (3, 4) comportant des fils extérieurs de raccordement (5), et dans lequel, pour le réglage de la distance (6) entre les fils extérieurs de raccordement (5) sur un pas de réseau déterminé des ouvertures de raccordement de la plaquette d'un circuit imprimé, la première couche de contact (3) est réalisée en un métal possédant un point de fusion supérieur à celui de la seconde couche de contact soudable (4), et les fils de raccordement (5) sont enfoncés, lors de l'opération de soudage ou de brasage, dans le métal de la seconde couche de contact (4) et s'appliquent contre la première couche de contact (3), caractérisé par le fait que les fils de raccordement (5) possèdent respectivement une partie plate (7), qui s'applique contre les premières couches de contact (3), qui est enfoncée à l'intérieur des secondes couches de contact (4) et qui est décalée latéralement par rapport à l'axe (8) des fils de raccordement (5) et dont l'épaisseur (9) est comprise approximativement entre un tiers et deux tiers du diamètre (10) des fils de raccordement (5) et dont la zone (11) de jonction avec la partie cylindrique (12) est en saillie respectivement par rapport aux bords (13) des premières couches de contact (3), et que les axes (8) des fils de raccordement (5) sont situés pratiquement dans le plan des premières couches de contact (3).

1/1

FIG 1

FIG 2

FIG 3

FIG 4    FIG 5

FIG 6

FIG 7